# EUROPEAN PATENT SPECIFICATION

(11) **EP 2 041 396 B1**
(45) Date of publication and mention of the grant of the patent: **14.09.2011**
(21) Application number: 07848937.4
(22) Date of filing: 19.07.2007
(51) Int. Cl.: F01B 11/00, B67D 1/10, F04B 9/113

(54) **FLUID-POWERED PROPORTIONING PUMP AND SYSTEM FOR DISPENSING FLUID INCLUDING SUCH A PUMP**
FLÜSSIGKEITSGETRIEBENE VERTEILUNGSPUMPE UND SYSTEM ZUR FLÜSSIGKEITSAUSGABE MIT EINER SOLCHEN PUMPE
POMPE DOSEUSE ALIMENTÉE EN FLUIDE ET SYSTÈME PERMETTANT DE DISTRIBUER DU FLUIDE INCLUANT UNE POMPE

(30) Priority: 19.07.2006 US 831792 P
(43) Date of publication of application: 01.04.2009
(73) Proprietor: Fluid-O-Tech S.r.l., 20094 Corsico (MI) (IT)
(72) Inventor: ELLERO, Dario, Fiorello, Gabriele, 20154 Milano (IT)
(74) Representative: Coletti, Raimondo
(86) International application number: PCT/IB2007/003616
(87) International publication number: WO 2008/029288

(56) References cited:
- WO-A-90/12197
- US-A- 3 700 360
- US-A1- 2002 071 771

## Description

### Related Applications

This application claims the benefit of priority under 35 U.S.C. § 119(e) of U.S. Provisional Application No. 60/831,792, filed on July 19, 2006, the disclosure of which is incorporated herein by reference.

### Field of the Disclosure

The present disclosure relates to fluid motor devices configured to convert a portion of the energy of fluid flow into reciprocating movement, and, more particularly, to devices including a fluid-powered motor operably associated with a fluid pump. Additionally, the present disclosure relates to fluid circuits configured to proportion and/or dispense two or more fluids.

### Background

Fluid pumps may be powered by electric motors. Fluid pumps driven by electric motors may have a number of drawbacks. For example, in some applications, fluid pumps driven by electric motors may be undesirable for safety reasons. For instance, when pumping solvents, acids, oils, and/or flammable liquids, it can be disadvantageous, or even dangerous, to operate high-voltage or high-current electric motors to drive the pumps. In addition, fluid pumps driven by electric motors may not easily start from a stalled condition and/or stop into a stalled condition. In some applications it may be desirable to provide intermittent fluid flow, which requires cyclic starting and stopping of fluid flow. As a result, fluid pumps driven by electric motors may not provide satisfactory operation.

One alternative to driving pumps with electric motors is using fluid motors to drive pumps. Existing fluid motors, however, may suffer from a number of potential drawbacks. For example, fluid motors may include valve ports that limit fluid flow through the motor in a manner that results in a pressure drop and/or turbulence through the fluid motor. As a.result, when a powering fluid is saturated with a gas, for example, when the fluid is a gas-saturated carbonated water, too much pressure drop and turbulence through a fluid motor may cause CO₂ to bubble out of solution, which adversely affects the precision of a fluid-powered proportioning pump used for pumping and/or proportioning carbonated water and a mixer, such as a syrup. In addition, some fluid motors may experience internal valve leakage in the motor while shifting between operational positions, which may adversely affect the precision of fluid proportioning. An existing fluid motor is described, for example, in document WO 90/12197 A, wherein the valve device is provided with a single slide reciprocated by a pilot rod between its terminal positions

Existing fluid dispensing systems include post-mix beverage dispensers. The design of existing post-mix beverage dispensers for dispensing post-mix fountain drinks, such as, for example, COCA COLA® and PEPSI®, is now relatively standardized around the world. Post-mix fountain drinks may often include a syrup and a water component that mix as the fluids fall into a serving cup. For drinks using, for example, carbonated water, as a component, the ratio of syrup to water may be approximately 1 to 5. In some post-mix beverage dispensers, a dispensing valve provides a proportioning function and the on/off function for the syrup and water components. Such post-mix dispensers commonly require periodic calibration and adjustment as the proportioning is provided by orifices using pressure compensation.

In some existing dispensers, pressurized syrup is provided to a dispensing valve by a gas-operated diaphragm pump from an ambient-pressure, flexible syrup bag contained in a cardboard box. A gas for conveying the syrup under pressure is typically provided from a pressurized CO₂ tank. The syrup boxes, tubing, controls, and a pump are collectively referred to as a "bag-in-box" (BIB) system, and the pump is commonly referred to as a bag-in-box (BIB) pump. In some dispensing systems, the BIB pump may draw from several syrup bags and pump syrup to several dispensing valves. In some existing dispensers, water may be provided to a dispensing valve under pressure. If the fluid (e.g., a drink) is non-carbonated, the water pressure may be provided by either existing domestic water line pressure or, if too low, a water-pressure booster pump. If the fluid, (e.g., a drink) is carbonated, pressure for the carbonated water may be provided by a carbonator pump and CO₂ line pressure.

One desire of the present disclosure may be to provide a device that converts a first fluid flow and/or pressure into mechanical motion via a fluid motor and converting the mechanical motion into a fluid flow and pressure via a fluid pump.

Another desire of the present disclosure may be to provide a fluid motor, wherein the energy for first stage valve actuation is supplied by piston displacement.

Yet another desire of the present disclosure may be to provide a fluid motor, wherein the energy for second stage valve actuation is provided by the flow and pressure of a first powering fluid, which is controlled via a first stage valve.

Still another desire of the present disclosure may be to provide a fluid motor, wherein the energy for valve actuation is supplied by a pressure differential across the fluid motor and/or across a pressurizing pump associated with a first fluid.

Still a further desire of the present disclosure may be to provide a fluid motor, wherein valve actuation is enabled by proximity of a piston to an end of a piston chamber, wherein a shaft driven by the piston makes contact with a valve first stage configured to operate a valve second stage, thereby allowing shifting of a multi-port valve.

Yet a further desire of the present disclosure may be to provide a multi-port valve having concentric elements.

Yet another desire of the present disclosure may be to provide a multi-port valve element, which may prevent pinching of o-ring seals during operation.

Still a further desire of the present disclosure may be is to provide a device configured to stop and/or restart in response to a first fluid flow and/or pressure.

Another desire of the present disclosure may be to provide a device configured to stop and/or restart in response to a second fluid flow and/or pressure.

Yet an additional desire of the present disclosure may be to provide a fluid motor configured to stop and/or restart in response to input fluid flow and/or pressure.

Still a further desire of the present disclosure may be to provide a fluid motor configured to stop and/or restart in response to shaft pressure.

An additional desire of the present disclosure may be to provide accurate, volumetric proportioning of two or more fluids.

A further desire of the present disclosure may be to provide a fluid motor-driven proportioning pump having a fixed ratio.

Still a further desire of the present disclosure may be to provide a fluid motor-driven proportioning pump having an adjustable ratio. '

Yet another desire of the present disclosure may be to provide a device configured to operate when the fluids are in a liquid state and/or a gas state.

A further desire of the present disclosure may be to provide a device configured to sense a reciprocating motion for controlling and/or measuring operation.

Still an additional desire of the present disclosure may be to provide a fluid circuit configured to deliver multiple fluids from multiple sources to multiple destinations.

Yet another desire of the present disclosure may be to provide a two-stage motion valve having concentric elements.

A further desire of the present disclosure may be to provide an anti-stalling, motion valve that does not include the use of spring and/or elastic elements.

Yet another desire of the present disclosure may be to provide an anti-stalling motion valve, which exhibits substantially silent operation in comparison to spring-operated valve arrangements.

The present disclosure may seek to satisfy one or more of the above-mentioned desires. Although the present disclosure may obviate one or more of the above-mentioned desires, it should be understood that some aspects of the disclosure might not necessarily obviate them.

### SUMMARY

In the following description, certain aspects and embodiments will become evident. It should be understood that the invention, in its broadest sense, could be practiced without having one or more features of these aspects and embodiments. It should be understood that these aspects and embodiments are merely exemplary.
The invention relates to a fluid-powered proportioning pump for controlling flow of relative amounts of one or two fluids. The proportioning pump comprises a fluid motor configured to convert fluid flow into mechanical work. The motor comprises a first chamber, a second chamber, a piston separating the first chamber and the second chamber from one another, the motor piston being configured to reciprocate, and a shaft operably coupled to the motor piston. The proportioning pump also comprises a valve assembly configured to selectively control flow of fluid to the first chamber and the second chamber. The valve assembly comprises a housing, a portion of the shaft configured to operably couple the valve assembly to the motor, a first-stage valve spool configured to reciprocate within the valve housing in response to fluid flowing into the valve assembly and movement of the shaft portion, and a second-stage valve spool configured to reciprocate within the valve housing in response to fluid flowing into the valve assembly and movement of the first-stage valve spool. The proportioning pump also comprises a fluid pump operably coupled to the motor and the valve assembly through the shaft. The fluid pump comprises a housing and a pump piston configured to reciprocate within the pump housing, the shaft being operably coupled to the pump piston. The valve housing, the shaft, the shaft portion, the first-stage valve spool and the second-stage valve spool form a nested relationship and are concentric with respect to one another. The first-stage valve spool and the second-stage valve spool are shifted by a powering fluid entering the valve assembly to selectively control the flow of fluid into the first chamber and the second chamber of the motor such that the motor piston reciprocates, thereby causing reciprocation of the shaft for moving the pump piston.

Additional objects and advantages of the disclosure will be set forth in part in the description that follows, and in part will be obvious from the description, or may be learned by practice of the disclosure. It is to be understood that both the foregoing general description and the following detailed description are exemplary and explanatory only and are not restrictive of the invention, as claimed. Aside from the structural and procedural arrangements set forth above, the invention could include a number of other arrangements such as those explained hereinafter.

### BRIEF DESCRIPTION OF THE DRAWINGS

The accompanying drawings, which are incorporated in and constitute a part of this specification, illustrate several embodiments of the invention and together with the description, serve to explain the principles of the invention, in the drawings,

Fig. 1 is a schematic, partial section view of an exemplary embodiment of a pump and an exemplary embodiment of a motor operably associated with the exemplary pump;

Fig. 2 is a schematic section view of an exemplary embodiment of a valve shown in one operational condition;

Fig. 3 is a schematic section view of the exemplary valve shown in Fig. 2 in a second operational condition;

Fig. 4 is a schematic section view of the exemplary valve shown in Fig. 2 in a third operational condition;

Fig. 5 is a schematic section view of the exemplary valve shown in Fig. 2 in a fourth operational condition;

Fig. 6 is a schematic perspective view of an exemplary embodiment of a valve;

Fig. 7 is a schematic, block diagram of an exemplary embodiment of a dispensing circuit, including an exemplary embodiment of a fluid-powered proportioning pump; and

Fig. 8 is a schematic, block diagram of an exemplary embodiment of a dispensing circuit including an exemplary embodiment of a fluid-powered proportioning pump.

### DESCRIPTION OF EXEMPLARY EMBODIMENTS

Reference will now be made in detail to exemplary embodiments of the invention. Wherever possible, the same reference numbers are used in the drawings and the description to refer to the same or like parts.

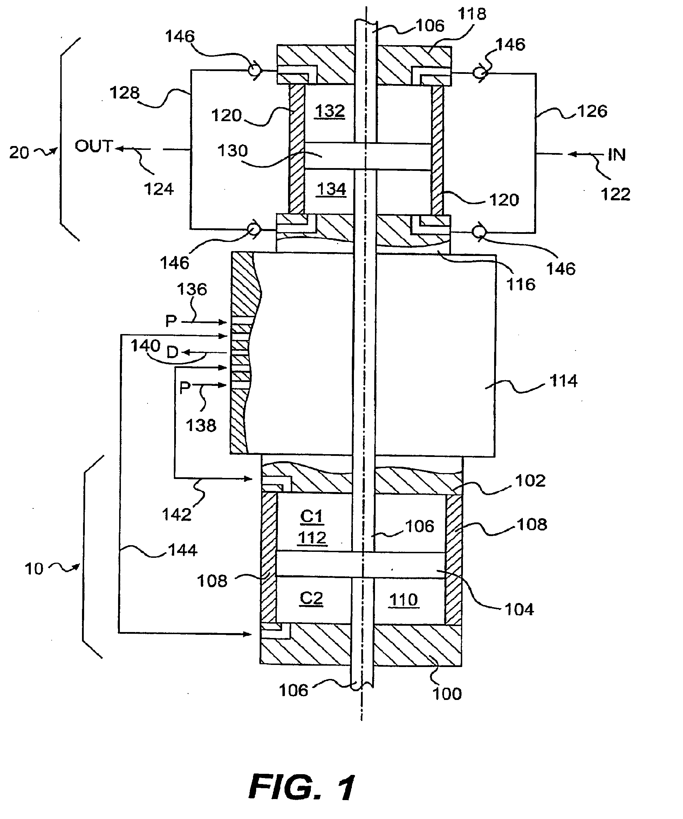

Fig. 1 schematically depicts an exemplary embodiment of a fluid motor 10 and an exemplary embodiment of a fluid pump 20. The exemplary fluid motor 10 includes end cap 100, shaft 106, cylindrical motor case 108, end cap 102, and piston 104. A variable volume chamber 112 is formed by end cap 102, piston 104, and case 108. Another variable volume chamber 110 is formed by end cap 100, piston 104, and case 108.

An exemplary valve assembly 114 operably associated with the fluid motor 10 and the fluid pump 20 is shown in Fig. 1. The exemplary valve assembly 114 is a shaft position-responsive, pilot-operated, four-way valve. (For clarity, a manifold providing communication between the fluid motor 10 and the valve assembly 114 is not shown, but exemplary fluid paths are shown schematically.) The valve assembly 114 includes an inlet port 136 and an inlet port 138, which communicate within and then through the manifold. The valve assembly further includes an outlet port 140, which communicates through the manifold.

The exemplary fluid motor 10 includes a chamber 110, which communicates with valve assembly 114 via a passageway 144 included in the manifold. The fluid motor 10 also includes a chamber 112, which communicates with the valve assembly 114 via a passageway 142 in the manifold.

The exemplary fluid pump 20 includes an end cap 118, a shaft 106, a cylindrical motor case 120, an end cap 116, and a piston 130. The fluid pump 20 includes a variable volume chamber 132 formed by end cap 118, piston 130, and case 120, and a variable volume chamber 134 formed by the end cap 116, the piston 130, and the case 120. A pump inlet port 122 communicates with the chamber 132 and the chamber 134 via a manifold 126 and check valves 146. A pump outlet port 124 communicates with the chamber 132 and the chamber 134 via a manifold 128 and check valves 146. The shaft 106 extends from the fluid motor 10 through the valve assembly 114 to the fluid pump 20. Although shaft 106 is shown penetrating end cap 118, it could alternatively terminate at the piston 130. Although the shaft 106 is shown penetrating the end cap 100, it could alternatively terminate at the piston 104. During exemplary operation, a first fluid enters an inlet port of valve manifold (not shown) to the valve inlet port 136 and the valve inlet port 138, where it is directed by the valve assembly 114 to either motor chamber 112 or motor chamber 110.

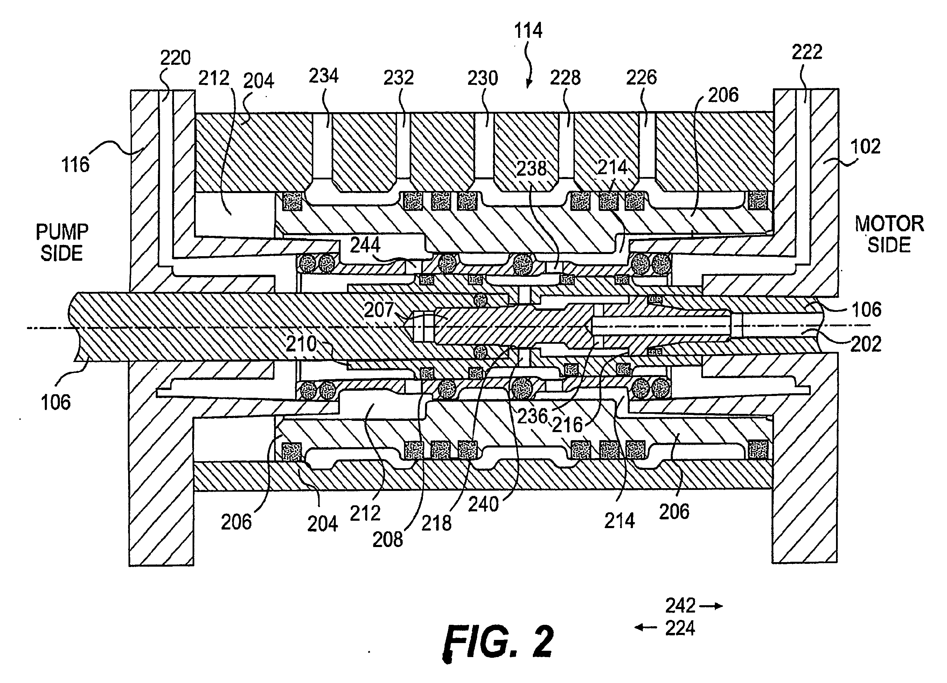

Fig. 2 is a schematic section view of an exemplary embodiment of the valve assembly 114 shown in an operational condition in which the shaft 106 is positioned at an extreme position toward the fluid motor 10. The exemplary valve assembly is a multi-port valve assembly, which includes concentric elements: shafts 106, a shaft connector 207, a first-stage valve spool 210, an inner valve element 208, a second-stage valve spool 206, and an outer valve element 204. The exemplary valve assembly 114 includes a motor end cap 102, and an end cap 116. According to some embodiments, the valve elements use static and dynamic seals, such as, for example, o-rings that are shown but not specifically identified. Of these valve assembly elements, the shafts 106, first-stage valve spool 210, and second-stage valve spool 206 are configured to reciprocate within the valve assembly 114. As shown in Fig. 2, the first-stage valve spool 210 and the second-stage valve spool 206 are positioned toward to fluid motor 10 to illustrate one exemplary operational condition.

According to the exemplary embodiment, a variable volume valve chamber 212 is formed by outer valve element 204, second stage valve spool 206, end cap 116, and inner valve element 208. A variable volume valve chamber 214 is formed by outer valve element 204, second stage valve spool 206, motor end cap 102, and inner valve element 208. As will be explained in more detail below, ports and passageways are used to achieve a reciprocating function of the fluid motor 10. A motor inlet communicates through a manifold (not shown) to valve inlet port 226 and valve inlet port 234. A motor outlet communicates through a manifold (not shown) to valve outlet port 230. Valve motor port 228 communicates through a manifold (not shown) through passageway 142 to motor chamber 112. Valve motor port 232 communicates through a manifold (not shown) through passageway 144 to motor chamber 110. A passageway 220 communicates selectively with variable volume valve chamber 212 through a manifold (not shown) to a high pressure source.

Selective communication is determined by position of first-stage valve spool 210. A passageway 222 communicates selectively with variable volume valve chamber 214 through a manifold (not shown) to a high pressure source. Selective communication is determined by position of first-stage valve spool 210. The motor inlet pressure may provide the high pressure for passageway 220 and passageway 222 via a manifold (not shown). Alternatively, the pressure source may be from a source separate from a first powering fluid.

Via a manifold (not shown) in flow communication with a low pressure source, a passageway 202 within shaft 106 communicates selectively with variable volume valve chamber 214 and/or variable volume chamber 212 through shaft ports 236. Selective communication may be determined by the position of first-stage valve spool 210. The motor outlet pressure may provide the low pressure for passageway 202 by means of a manifold (not shown). Alternatively, or in addition, the pressure source may be provided by a source separate from a first powering fluid, such as, for example, venting to drain or to atmosphere.

When, for example, shaft 106 approaches the limit of its travel, one shaft shoulder 216 or the other shaft shoulder 218 contacts first stage valve spool 210 and shifts it. As the spool 210 shifts, the configuration of internal ports and passages change, eventually leading to a pressure reversal in valve chamber 214 and valve chamber 212. The pressure reversal in valve chamber 214 and valve chamber 212 causes second-stage spool valve 206 to shift. A shift in second-stage spool valve 206 changes the configuration of ports and passages, leading to a flow reversal of a first powering fluid to and from motor chamber 112 and motor chamber 110. A flow reversal in a fluid motor 10 causes a reversal in travel direction in motor piston 104 and shaft 106. This reversal, in turn, defines a limit of travel in one direction. This cycle repeats as shaft 106 approaches the other limit of travel. In particular, a first-stage spool valve 210 responds to a shaft position. A second-stage spool valve 206 responds to a position of a first-stage spool valve 210. A piston 104 and shaft 106 of a fluid motor responds to a position of a second-stage spool valve 206.

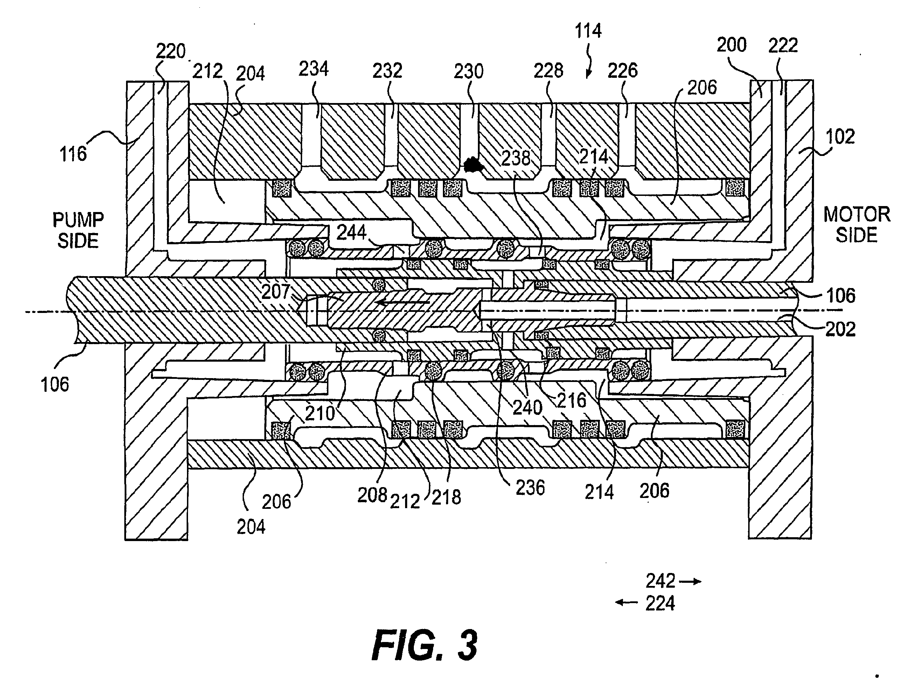

Operation of the valve assembly 114 may be understood with reference to Figs. 3, 4, and 5, which schematically depict exemplary flow and pressure changes in exemplary valve assembly 114 by showing the changing positions of a shaft 106, first-stage spool valve 210, and second-stage spool valve 204. For example, as shown in Fig. 2, shaft 106, second-stage spool valve 206, and first-stage spool valve 210 are at extreme positions in the direction of arrow 242 (i.e., toward the fluid motor 10). The subsequent movement of shaft 106 is in the direction of arrow 224.

During exemplary operation, a first powering fluid enters an inlet port through a manifold (not shown), flows to valve port 234, and communicates with valve port 232 as a result of a passageway created by the position of second-stage valve spool 206. A powering fluid then flows through a manifold (not shown) to motor chamber 110. The motor chamber 110 expands and motor chamber 112 contracts. The displaced fluid of chamber 112 flows through a manifold (not shown) to valve port 228, and then to port 230 as a result of a passageway created by position of the second-stage valve spool 206. The displaced fluid then flows through a manifold (not shown) to an outlet port (not shown). Port 226 is also in communication with a powering fluid. However, the flow is blocked because no passageway has been created by second-stage valve spool 206. Inlet pressure (i.e., a relatively higher pressure) communicates with chamber 212 through passageway 220 and through port 244 in inner valve element 208. Discharge pressure (i.e., a relatively lower pressure) communicates with chamber 214 through passageway 202 within shaft 106, through shaft port 236, through spool valve port 240, and through inner valve element port 238. The resulting pressure imbalance causes an unbalanced force, thereby positioning second-stage valve spool 206 in its extreme position in the direction of arrow 242 (i.e., toward fluid motor 10). Inlet pressure (i.e., a relatively higher pressure) is blocked from communicating with chamber 214 because the position of first-stage spool valve 210 results in no passageway for the fluid.

Fig. 3 is a schematic section view of the exemplary valve shown in Fig. 2 in a second operational condition with the shaft 106 at an intermediate position, the first-stage valve spool 210 at an extreme position toward the fluid motor 10, and the second-stage valve spool 206 at an extreme position toward the fluid motor 10. As shown in Fig. 3, the second-stage spool valve 206 and the first-stage spool valve 210 are at their extreme position in direction of arrow 242, and the shaft 106 has moved to an intermediate position in the direction of arrow 224 toward the fluid pump 20. A shaft shoulder 216 makes contact with first-stage spool valve 210. Further movement of the shaft 106 in a direction 224 will result in movement of the first-stage spool valve 210 in direction of arrow 224. The movement of the shaft 106 is in the direction of the arrow 224.

During exemplary operation, a first powering fluid enters an inlet port through a manifold (not shown) to the valve port 234 and communicates with the valve port 232 as a result of a passageway created by position of second-stage valve spool 206. A powering fluid then flows through a manifold (not shown) to motor chamber 110. Motor chamber 110 expands and motor chamber 112 contracts. The displaced fluid of chamber 112 flows through a manifold (not shown) to valve port 228 and then to port 230 as a result of a passageway created by position of the second-stage valve spool 206. The displaced fluid then flows through a manifold (not shown) to an outlet port (not shown). Port 226 is also in communication with a powering fluid. However, the flow is blocked to port 226 because no passageway has been created by second-stage valve spool 206. Inlet pressure (i.e., a relatively higher pressure) communicates with the chamber 212 through passageway 220 and through port 244 in inner valve element 208. Discharge pressure (i.e., a relatively lower pressure) communicates with the chamber 214 through passageway 202 within shaft 106, through shaft port 236, through spool valve port 240, and through inner valve element port 238. The resulting pressure imbalance causes and unbalanced force, thereby positioning second-stage valve spool 206 in its extreme position in the direction of arrow 242. Inlet pressure (i.e., a relatively higher pressure) is blocked from communicating with chamber 214 because the position of first-stage valve spool 210 results in no passageway.

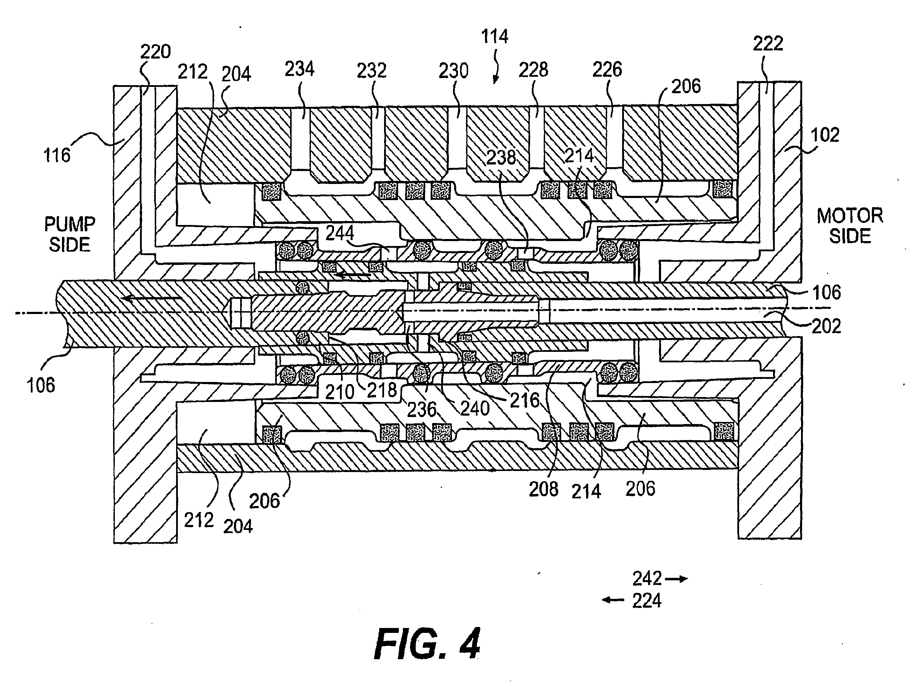

Fig. 4 is a schematic section view of the exemplary valve assembly 114 shown in Fig. 2 in a third operational condition with the shaft 106 positioned toward the fluid pump 20, first-stage valve spool 210 positioned toward the fluid pump 20, and the second-stage valve spool 206 positioned toward the fluid motor 10. In particular, shaft 106 and first-stage valve spool 210 are at their extreme position in direction of arrow 224, and second-stage valve spool 206 is in an extreme position in the direction of arrow 242. Second-stage valve spool 206 is just beginning to move in the direction of arrow 224. A shaft shoulder 216 makes contact with the first-stage valve spool 210, and further movement of the shaft 106 in the direction of arrow 224 is not possible because it is at the limit of its travel. The direction of movement of shaft 106 is about to reverse in the direction of arrow 242.

During exemplary operation, a first powering fluid enters an inlet port through a manifold (not shown) to valve port 234 and communicates with valve port 232 as a result of a passageway created by the position of the second-stage valve spool 206. A powering fluid then flows through a manifold (not shown) to motor chamber 110. Motor chamber 110 expands, and motor chamber 112 contracts. The displaced fluid of motor chamber 112 flows through a manifold (not shown) to valve port 228 and then to port 230 as a result of a passageway created by the position of the second-stage valve spool 206. The displaced fluid then flows through a manifold (not shown) to an outlet port (not shown). Port 226 is also in communication with a powering fluid. However, the flow is blocked because no passageway has been created by the second-stage valve spool 206. Inlet pressure (i.e., a relatively higher pressure) communicates with chamber 214 through passageway 222 and through port 238 in valve element 208. Discharge pressure (i.e., a relatively lower pressure) communicates with chamber 212 through passageway 202 within shaft 106, through shaft port 236, through spool valve port 240, and through inner valve element port 244. The resulting pressure imbalance causes an unbalanced force, which causes the second-stage valve spool 206 to shift in the direction of arrow 224. Inlet pressure (i.e., a relatively higher pressure) is blocked from communicating with chamber 212 because the position of the first-stage spool valve 210 results in no passageway.

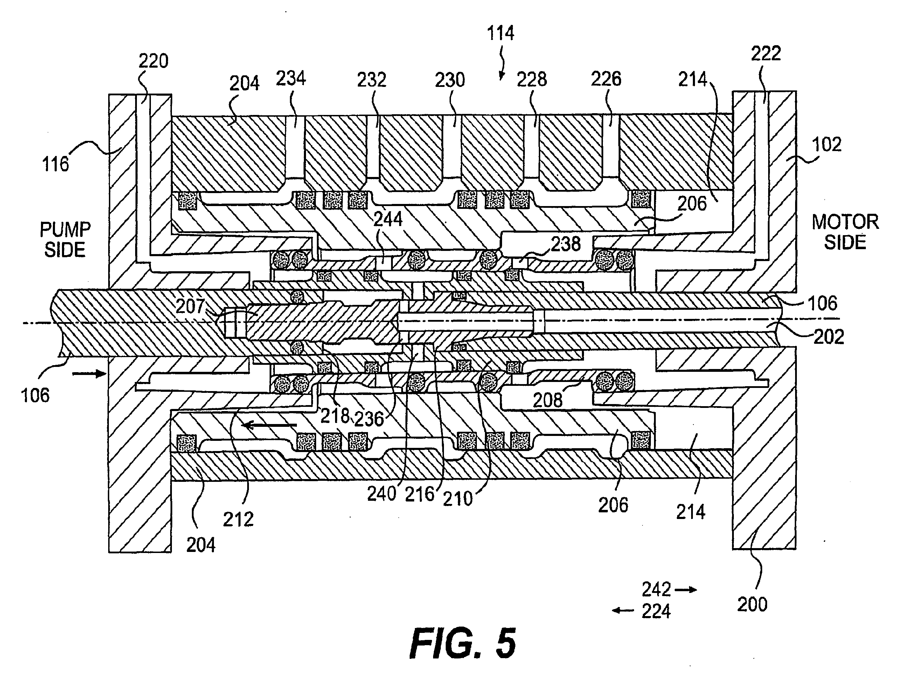

Fig. 5 is a schematic section view of the exemplary valve shown in Fig. 2 in a fourth operational condition, with the shaft 106 located at an extreme position toward the fluid pump 20, the first-stage valve spool 210 located at an extreme position toward the fluid pump 20, and the second-stage valve spool 206 located at an extreme position toward the fluid pump 20. In particular, the shaft 106, the second-stage spool valve 206, and the first-stage spool valve 210 are at their extreme position in the direction of arrow 224, and the shaft 106 is beginning to move in the reverse direction, (i.e., in the direction of arrow 242). The shaft 106 travels a distance before the shaft shoulder 218 makes contact with first-stage valve spool 210.

During exemplary operation, a first powering fluid enters an inlet port through a manifold (not shown) to valve port 226 and communicates with valve port 228 as a result of a passageway created by the position of second-stage valve spool 206. A powering fluid then flows through a manifold (not shown) to motor chamber 112. The motor chamber 112 expands, and the motor chamber 110 contracts. The displaced fluid of motor chamber 110 flows through a manifold (not shown) to valve port 232 and then to port 230 as a result of a passageway created by the position of second-stage valve spool 206. The displaced fluid then flows through a manifold (not shown) to an outlet port (not shown). Port 234 is also in flow communication with a powering fluid. However, the flow is blocked because no passageway has been created by the second-stage valve spool 206. Inlet pressure (i.e., a relatively higher pressure) communicates with chamber 214 through passageway 222 and through port 238 in valve element 208. Discharge pressure (i.e., a relatively lower pressure) communicates with chamber 212 through passageway 202 within the shaft 106, through shaft port 236, through spool valve port 240, and through inner valve element port 244. The resulting pressure imbalance causes and unbalanced force, which positions second-stage valve spool 206 in its extreme position in the direction of arrow 224. Inlet pressure (i.e., a relatively higher pressure) is blocked from communicating with chamber 212 because the position of first-stage valve spool 210 results in no passageway.

The first-stage valve spool 210 reverses the actuating pressure on the second-stage valve spool 206 responsive to the position of the shaft 106. As first-stage valve spool 210 travels between its limits of travel, it will create a null state where neither high pressure nor low pressure communicates with chamber 212 or chamber 214.

According to some embodiments, powering fluids may include powering liquids and/or a powering gas or gases, such as, for example, compressed gas. Thus, the term "fluid" is meant to include any gas, liquid, and/or mixed phase, including gas and liquid.

According to some embodiments, various static and/or dynamic seals may be incorporated into the fluid motor, fluid pump, and/or valve assembly. For example, gaskets, adhesives, o-rings and/or various combinations may be used for static seals. Close running fits, piston rings, packings, o-rings, lip seals, and/or combinations thereof may be used for dynamic seals of pistons and rods. Other seals may be used.

According to some embodiments, multiple fluid pumps may be operated via a single fluid motor. For example, in addition to the exemplary fluid pump shown in Fig. 1, one or more additional fluid pumps may be added via shaft extensions and/or pistons operating in stacked chambers, for example, via the repetition of pump housings. It should be noted that the chambers and/or pistons need not have the same cross section and/or displacement per stroke. Any type of fluid pump including a reciprocation motion may be suitable for mounting to a fluid motor according to some embodiments. Some examples of such fluid pumps include piston pumps, diaphragm pumps having a diaphragm operable via a reciprocating motion. Other types of fluid pumps may also be used. Although the exemplary valve assembly depicted herein is shown positioned between the fluid pump and the fluid motor, alternative locations may include positioning the valve assembly on one end of a fluid motor and on one end of a fluid pump.

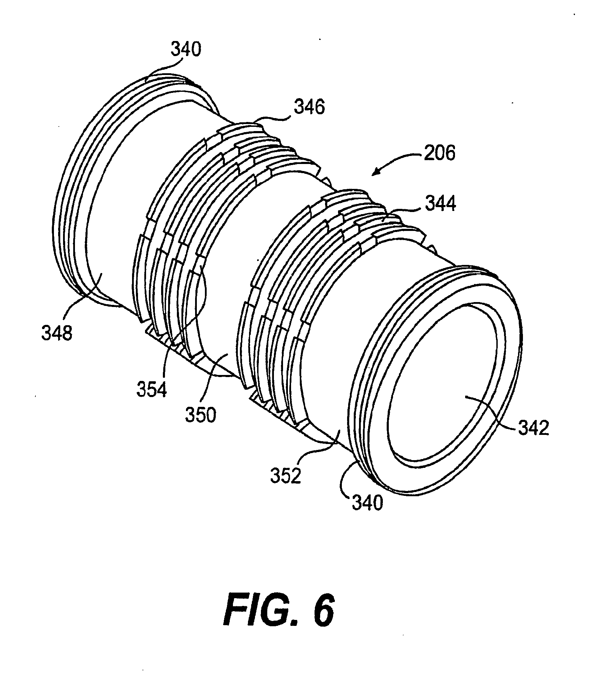

Fig. 6 is a schematic perspective view of an exemplary embodiment of a valve spool 206. The exemplary valve spool 206 includes a castellated o-ring groove wall. The exemplary concentric valve spool 206 may operate according to one or more of the exemplary descriptions relating to Figs. 2-5. The exemplary valve spool 206 defines a hollow, substantially cylindrical shape. The valve spool 206 includes a port relief 352, a port relief 350, and a port relief 348. The valve spool 206 further includes end o-ring grooves 340. The valve spool 206 may further include a first set of o-ring grooves 344 and a second set of o-ring grooves 346. Each set of o-ring grooves includes, for example, three o-ring grooves having notches 354 forming castellations in the o-ring grooves. Such castellations may reduce the likelihood of, for example, pinching of the o-ring seals as the valve spools 206 and 210 move relative to one another and/or other portions of the valve assembly 114.

The exemplary valve spool 206 may be configured to receive, for example, dynamic o-ring seals in grooves 344 and grooves 346, which may be biased for expansion out of their respective grooves as valve spool 206 shifts and extends through a widening space as grooves 344 and/or grooves 346 enter a low pressure zone and are no longer confined. When not confined, an o-ring of groove 344 and/or groove 346 may begin to expand. This expansion may be countered by a new pressure relief path formed under an o-ring by notches 354. The notches 354 may be configured to be small enough compared to a cross section of an o-ring, so as not to form an extension opportunity themselves. The notches 354 may be configured so as to not contribute to leakage as a seal is formed when o-rings are confined by the bottom of an o-ring groove 344 and/or groove 346 and the inner cylindrical surface of outer valve element 204.

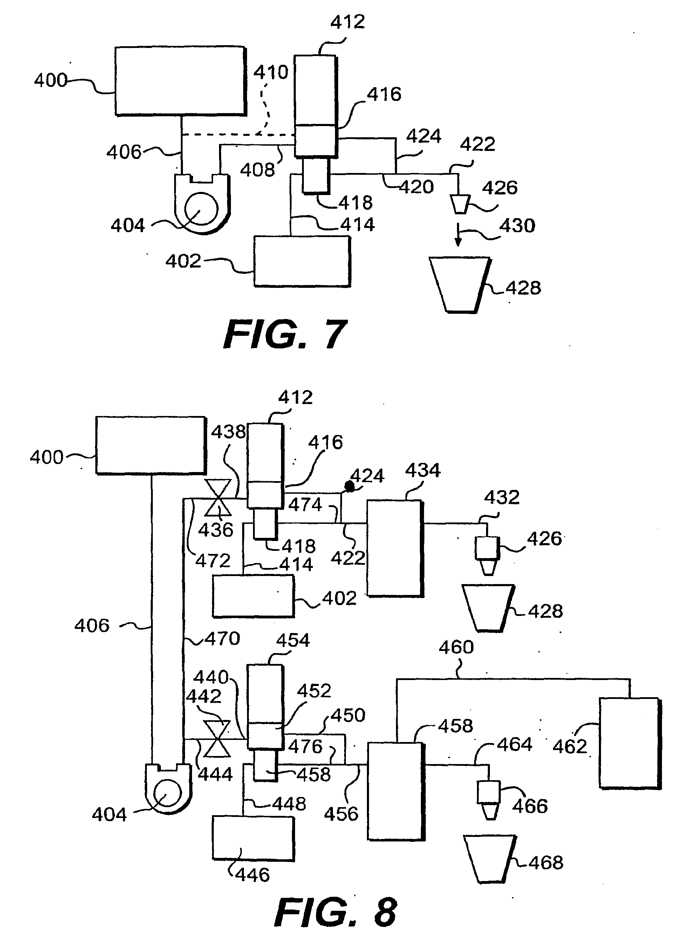

Fig. 7 is a schematic, block diagram of an exemplary embodiment of a dispensing circuit including an exemplary embodiment of a fluid-powered proportioning pump. The exemplary embodiment shown in Fig. 7 includes a single dispenser valve, such as may be used, for example, in post-mix beverage dispensing. The exemplary circuit illustrated anticipates that fluid pressure in line 408 will be higher than fluid pressure in line 424 and that pressure in line 420 is higher than the pressure in line 414. The circuit is configured such that other devices may be included in the circuit before or after the fluid-powered proportion pump, such as devices that add additional components (ingredients) to the powering fluid, the pumped fluid, or both. The exemplary circuit is configured such that powering fluid flow may be stopping and/or starting via devices, including booster pumps, manually-operated valves, and/or power-operated valves (e.g., solenoid valves). Such devices may be responsive to a controller, sensor, and/or limit device. The exemplary circuit is configured to incorporate a fluid-powered proportion unit having multiple pumps, which may proportion multiple additional ingredients.

A fluid-powered proportioning unit may include a motor section 412, a valve section 416, and a pump section 418. According to the exemplary embodiment shown in Fig. 7, a powering fluid source 400 supplies a booster pump 404 through a line 406. The booster pump 404 supplies a pressurized fluid to the fluid-powered proportion unit through line 408. According to exemplary operation, if the pressure of fluid source 400 is already high enough to operate a fluid powering proportioning unit in the system, then the booster pump 404 may be excluded from the exemplary circuit. A second pumped fluid source 402 communicates with an inlet of pump section 418 of a fluid-powered proportioning pump through line 414. A powering fluid is discharged from a motor through line 424. A second pumped fluid is discharged through line 420. Lines 424 and line 420 join to form line 422, which contains a proportioned flow of a first powering fluid and a second pumped fluid that communicates with dispenser outlet 426. Proportioned flow 430 exits the dispenser at dispenser outlet 426 to be received in product container 428. According to some embodiments, a line 410 may provide flow communication between fluid source 400 and valve assembly 416, for example, to permit fluid flow to a destination of lower pressure, which may result in greater energy availability for valve operation.

The proportioned flow may be dispensed in alternative ways. For example, line 424 and line 420 may be configured to deliver respective flows unjoined or unmixed prior to the dispense point 426, and mixing could occur as a separate operation. According to some embodiments, a dispense point may be the termination point as a subsystem in a larger system. According to some embodiments, a dispense point may be a nozzle rather than a faucet. The character of dispense point may be determined according to the application needs.

Fig. 8 is a schematic, block diagram of an exemplary embodiment of a dispensing circuit including an exemplary embodiment of a fluid-powered proportioning pump, wherein the dispenser system includes an array of fluid-powered, proportioning pumps and dispenser valves, such as may be used in, for example, post-mix beverage dispensing systems. According to the exemplary embodiment shown, to provide energy for operation of a fluid motor 412 and valve section 416, the circuit illustrated anticipates that the fluid pressure in line 438 will be higher than the fluid pressure in line 424. The pressure in line 474 is higher than the pressure in line 414, and fluid flow is attained by pump section 418. To provide energy for operation of a fluid motor 454 and valve section 452, the exemplary circuit illustrated anticipates that the fluid pressure in line 440 will be higher than the fluid pressure in line 450. The fluid pressure in line 476 is higher than the pressure in line 448, and fluid flow is attained by pump section 458.

The exemplary circuit is configured such that other devices may be included in the circuit before and/or after the fluid-powered proportioning pump, such as devices that add additional components (ingredients) to the powering fluid, to the pumped fluid, or both. The circuit may be configured to stop and/or start flow of a powering fluid by devices including booster pumps, manually-operated valves, and power-operated valves (e.g., solenoid valves). Such devices may be configured to be responsive to a controller, sensor, and/or limit device. The circuit may be configured to include a fluid-powered proportioning unit having, for example, multiple pumps that may proportion multiple additional ingredients.

According to some embodiments, a fluid-powered proportioning unit includes a fluid motor section 412, a valve assembly 416, and a pump section 418. A powering fluid source 400 supplies a booster pump 404 through line 406, and the booster pump 404 supplies a pressurized fluid to distribution manifold 470. A branch circuit includes a line 472 branching off of manifold 470. A valve 436 is configured to interrupt the flow of a first powering fluid, and the valve 436 may be, for example, a solenoid valve responsive to a dispenser controller (not shown). Line 438 is in flow communication with valve assembly 416 and subsequently motor section 412.

During exemplary operation, if the pressure of fluid source 400 is already high enough to operate a fluid powering proportioning unit in the application, then the booster pump 404 may be excluded from the circuit. A second pumped fluid source 402 is in flow communication with an inlet of pump section 418 of a fluid-powered proportioning pump through line 414. A powering fluid is discharged from a fluid motor through line 424. A second pumped fluid is discharged through line 474. Lines 424 and line 474 join to form line 422, which may contain a proportioned flow of a first powering fluid and a second pumped fluid that enters accumulator 434. The accumulator 434 allows dispensing of a proportioned flow without the necessity of operation of a fluid-powered proportioning pump. The accumulator 434 may include a pressure switch to which a dispenser controller responds. The accumulator 434 may be of a type, such as, for example, a freezer barrel for frozen drinks.

According to exemplary operation, when dispenser valve 426 is opened, proportioned product flows from the accumulator 434, through line 432, through dispenser valve 426, and into product container 428.

According to some embodiments, a branch circuit begins from line 444 extending from the manifold 470. A valve 442 interrupts the flow of a first powering fluid. The valve 442 may be, for example, a solenoid valve responsive to a dispenser controller (not shown). Line 440 is in flow communication with the valve section 452 and subsequently the motor section 454.

If the pressure of the fluid source 400 is already high enough to operate a fluid-powered proportioning unit for the application, then the booster pump 404 may be excluded from the circuit. A second pumped fluid source 446 is in flow communication with an inlet of pump section 458 of a fluid-powered proportioning pump through line 448. A powering fluid is discharged from a motor through line 450, and a second pumped fluid is discharged through line 476. Lines 450 and line 476 join to form line 456, which contains a proportioned flow of a first powering fluid and a second pumped fluid that enters an accumulator 458. The accumulator 458 permits dispensing of a proportioned flow without the necessity of operation of a fluid-powered proportioning pump. The accumulator 434 may be of a specialized type, such as, for example, a carbonator, and may include a high-low level switch to which a dispenser controller responds. During exemplary operation, when the dispense valve 466 is opened, proportioned product flows from accumulator/carbonator 458 through line 464, through dispenser valve 466, and into product container 468. Carbon dioxide gas enters carbonator 458 through line 460 from pressurized carbon dioxide source 462.

It will be apparent to those skilled in the art that various modifications and variations can be made to the structures and methodologies described herein. Thus, it should be understood that the invention is not limited to the subject matter discussed in the description. Rather, the present invention is intended to cover modifications and variations, within the scope of the appended claims.

## Claims

1. A fluid-powered proportioning pump, for controlling flow of relative amounts of one or two fluids, comprising:
• a fluid motor (10) configured to convert fluid flow into mechanical work, the motor (10) comprising a first chamber (112), a second chamber (110), a piston (104) separating the first chamber (112) and the second chamber (110) from one another, the motor piston (104) being configured to reciprocate, and a shaft (106) operably coupled to the motor piston (104);
• a valve assembly (114) configured to selectively control flow of fluid to the first chamber (112) and the second chamber (110), the valve assembly (114) comprising a housing, a portion (207) of the shaft (106) configured to operably couple the valve assembly (114) to the motor (10), a first-stage valve spool (210) configured to reciprocate within the valve housing in response to fluid flowing into the valve assembly (114) and movement of the shaft portion (207), and a second-stage valve spool (206) configured to reciprocate within the valve housing in response to fluid flowing into the valve assembly (114) and movement of the first-stage valve spool (210); and
• a fluid pump (20) operably coupled to the motor (10) and the valve assembly (114) through the shaft (106), the pump (20) comprising a housing (120) and a pump piston (130) configured to reciprocate within the pump housing (120), the shaft (106) being operably coupled to the pump piston (130), **characterized in that** the valve housing, the shaft (106), the shaft portion (207), the first-stage valve spool (210) and the second-stage valve spool (206) form a nested relationship and are concentric with respect to one another, the first-stage valve spool (210) and the second-stage valve spool (206) being shifted by a powering fluid entering the valve assembly (114) to selectively control the flow of fluid into the first chamber (112) and the second chamber (110) of the motor (10) such that the motor piston (104) reciprocates, thereby causing reciprocation of the shaft (106) for moving the pump piston (130).

2. The fluid-powered proportioning pump of claim 1, wherein the valve assembly (114) is configured such that as fluid flows into the first chamber (112), the motor piston (104) moves toward the second chamber (110), thereby causing the shaft (106) to move in a first direction.

3. The fluid-powered proportioning pump of claim 2, wherein when the shaft (106) moves in the first direction, the first-stage valve spool (210) is moved in the first direction.

4. The fluid-powered proportioning pump of claim 3, wherein when the first-stage valve spool (210) reaches an end of travel in the first direction, the second-stage valve spool (206) moves in the first direction.

5. The fluid-powered proportioning pump of claim 3, wherein when the second-stage valve spool (206) reaches an end of travel in the first direction, fluid flow is directed into the second chamber (110) such that the motor piston (104) moves toward the first chamber (112) and the shaft (106) moves in a second direction.

6. The fluid-powered proportioning pump of claim 1, wherein the pump piston (130) separates the pump housing (120) into a first pump chamber (132) and a second pump chamber (134).

7. The fluid-powered proportioning pump of claim 6, wherein the first pump chamber (132) and the second pump chamber (134) each comprise an inlet orifice, configured to draw fluid into the respective pump chamber (132, 134) as the pump piston (130) moves to expand the respective pump chamber (132, 134), and an outlet orifice configured to expel fluid out of the respective pump chamber (132, 134) as the pump piston (130) moves to contract the respective pump chamber (132, 134).

8. The fluid-powered proportioning pump of claim 1, wherein a first fluid flows into the motor (10) and a second fluid is pumped by the fluid pump (20), the flow of the first fluid into the motor (10) and the second fluid pumped by the fluid pump (20) resulting in a proportion being substantially maintained between the volume of the first fluid flowing into the motor (10) and the volume of the second fluid pumped by the fluid pump (20).

9. The fluid-powered proportioning pump of claim 1, wherein at least one of the first-stage valve spool (210) and the second-stage valve spool (206) comprises one or more grooves (340, 344, 346) each configured to receive a seal, and wherein each groove (340, 344, 346) defines notches (354) configured to reduce the likelihood of pinching of the seal.

## Patentansprüche

1. Flüssigkeitsgetriebene Dosierpumpe zum Steuern der Strömung jeweiliger Mengen von einer oder zwei Flüssigkeiten, umfassend:
• einen Fluidmotor (10), der ausgebildet ist, um einen Flüssigkeitsstrom in mechanische Arbeit umzuwandeln, wobei der Motor (10) eine erste Kammer (112), eine zweite Kammer (110), einen Kolben (104), der die erste Kammer (112) und die zweite Kammer (110) voneinander trennt, wobei der Motorkolben (104) ausgebildet ist, um sich hin- und herzubewegen, und einen Schaft (106) umfasst, der betriebsfähig mit dem Motorkolben (104) verbunden ist;
• eine Ventilanordnung (114), die ausgebildet ist, um den Flüssigkeitsstrom zur ersten Kammer (112) und zur zweiten Kammer (110) selektiv zu steuern, wobei die Ventilanordnung (114) ein Gehäuse, einen Abschnitt (207) des Schafts (106), der ausgebildet ist, um die Ventilanordnung (114) betriebsfähig mit dem Motor (10) zu verbinden, einen Ventilschieber der ersten Stufe (210), der ausgebildet ist, um sich in Reaktion auf eine in die Ventilanordnung (114) strömende Flüssigkeit und eine Bewegung des Schaftabschnitts (207) im Ventilgehäuse hin- und herzubewegen, und einen Ventilschieber der zweiten Stufe (206) umfasst, der ausgebildet ist, um sich in Reaktion auf eine in die Ventilanordnung (114) strömende Flüssigkeit und eine Bewegung des Ventilschiebers der ersten Stufe (210) im Ventilgehäuse hin- und herzubewegen; und
• eine Fluidpumpe (20), die durch den Schaft (106) betriebsfähig mit dem Motor (10) und der Ventilanordnung (114) verbunden ist, wobei die Pumpe (20) ein Gehäuse (120) und einen Pumpenkolben (130) umfasst, der ausgebildet ist, um sich im Pumpengehäuse (120) hin- und herzubewegen, wobei der Schaft (106) betriebsfähig mit dem Pumpenkolben (130) verbunden ist,
**dadurch gekennzeichnet, dass** das Ventilgehäuse, der Schaft (106), der Schaftabschnitt (207), der Ventilschieber der ersten Stufe (210) und der Ventilschieber der zweiten Stufe (206) eine verschachtelte Beziehung bilden und zueinander konzentrisch sind, wobei der Ventilschieber der ersten Stufe (210) und der Ventilschieber der zweiten Stufe (206) durch eine in die Ventilanordnung (114) eintretende antreibende Flüssigkeit verschoben werden, um den Flüssigkeitsstrom in die erste Kammer (112) und die zweite Kammer (110) des Motors (10) derart selektiv zu steuern, dass sich der Motorkolben (104) hin- und herbewegt, und dadurch die Hinund Herbewegung des Schafts (106) zum Bewegen des Pumpenkolbens (130) zu bewirken.

2. Flüssigkeitsgetriebene Dosierpumpe nach Anspruch 1, bei der die Ventilanordnung (114) so ausgebildet ist, dass sich der Motorkolben (104), wenn Flüssigkeit in die erste Kammer (112) strömt, in Richtung der zweiten Kammer (110) bewegt und dadurch bewirkt, dass sich der Schaft (106) in eine erste Richtung bewegt.

3. Flüssigkeitsgetriebene Dosierpumpe nach Anspruch 2, bei welcher der Ventilschieber der ersten Stufe (210) in die erste Richtung bewegt wird, wenn sich der Schaft (106) in die erste Richtung bewegt.

4. Flüssigkeitsgetriebene Dosierpumpe nach Anspruch 3, bei welcher sich der Ventilschieber der zweiten Stufe (206) in die erste Richtung bewegt, wenn der Ventilschieber der ersten Stufe (210) eine Endlage in der ersten Richtung erreicht hat.

5. Flüssigkeitsgetriebene Dosierpumpe nach Anspruch 3, bei der, wenn der Ventilschieber der zweiten Stufe (206) eine Endlage in der ersten Richtung erreicht hat, der Flüssigkeitsstrom in die zweite Kammer (110) gelenkt wird, so dass sich der Motorkolben (104) in Richtung der ersten Kammer (112) bewegt und sich der Schaft (106) in eine zweite Richtung bewegt.

6. Flüssigkeitsgetriebene Dosierpumpe nach Anspruch 1, bei welcher der Pumpenkolben (130) das Pumpengehäuse (120) in eine erste Pumpenkammer (132) und eine zweite Pumpenkammer (134) unterteilt.

7. Flüssigkeitsgetriebene Dosierpumpe nach Anspruch 6, bei der die erste Pumpenkammer (132) und die zweite Pumpenkammer (134) jeweils eine Eintrittsöffnung, die ausgebildet ist, um Flüssigkeit in die jeweilige Pumpenkammer (132, 134) zu saugen, wenn sich der Pumpenkolben (130) bewegt, um die jeweilige Pumpenkammer (132, 134) auszudehnen, und eine Austrittsöffnung umfassen, die ausgebildet ist, um Flüssigkeit aus der jeweiligen Pumpenkammer (132, 134) auszustoßen, wenn sich der Pumpenkolben (130) bewegt, um die jeweilige Pumpenkammer (132, 134) zusammenzuziehen.

8. Flüssigkeitsgetriebene Dosierpumpe nach Anspruch 1, bei der eine erste Flüssigkeit in den Motor (10) strömt und eine zweite Flüssigkeit von der Fluidpumpe (20) gepumpt wird, wobei die Strömung der ersten Flüssigkeit in den Motor (10) und die Strömung der von der Fluidpumpe (20) gepumpten zweiten Flüssigkeit in einem Verhältnis resultieren, das im Wesentlichen zwischen dem Volumen der in den Motor (10) strömenden ersten Flüssigkeit und dem Volumen der von der Fluidpumpe (20) gepumpten zweiten Flüssigkeit aufrechterhalten wird.

9. Flüssigkeitsgetriebene Dosierpumpe nach Anspruch 1, bei der mindestens einer von dem Ventilschieber der ersten Stufe (210) und dem Ventilschieber der zweiten Stufe (206) eine oder mehr Nuten (340, 344, 346) umfasst, die jeweils für die Aufnahme einer Dichtung ausgebildet sind, und bei der jede Nut (340, 344, 346) Aussparungen (354) definiert, die ausgebildet sind, um die Wahrscheinlichkeit des Einklemmens der Dichtung zu verringern.

## Revendications

1. Pompe doseuse alimentée en fluide, pour contrôler un flux de quantités relatives d'un ou deux fluides, comprenant :
• un moteur à fluide (10) configuré pour convertir un flux de fluide en travail mécanique, le moteur (10) comprenant une première chambre (112), une deuxième chambre (110), un piston (104) séparant la première chambre (112) et la deuxième chambre (110) l'une de l'autre, le piston de moteur (104) étant configuré pour effectuer un mouvement alternatif, et un arbre (106) accouplé fonctionnellement au piston de moteur (104) ;
• un ensemble de soupape (114) configuré pour commander sélectivement un flux de fluide vers la première chambre (112) et la deuxième chambre (110), l'ensemble de soupape (114) comprenant un logement, une portion (207) de l'arbre (106) configurée pour accoupler fonctionnellement l'ensemble de soupape (114) au moteur (10), un piston de soupape de premier étage (210) configuré pour effectuer un mouvement alternatif dans le logement de soupape en réponse à un fluide circulant dans l'ensemble de soupape (114) et au mouvement de la portion d'arbre (207), et un piston de soupape de deuxième étage (206) configuré pour effectuer un mouvement alternatif dans le logement de soupape en réponse à un fluide circulant dans l'ensemble de soupape (114) et au mouvement du piston de soupape de premier étage (210) ; et
• une pompe à fluide (20) accouplée fonctionnellement au moteur (10) et à l'ensemble de soupape (114) par l'intermédiaire de l'arbre (106), la pompe (20) comprenant un logement (120) et un piston de pompe (130) configuré pour se déplacer alternativement dans le logement de pompe (120), l'arbre (106) étant accouplé fonctionnellement au piston de pompe (130),
**caractérisée en ce que** le logement de soupape, l'arbre (106), la portion d'arbre (207), le piston de soupape de premier étage (210) et le piston de soupape de deuxième étage (206) forment une relation imbriquée et sont concentriques les uns par rapport aux autres, le piston de soupape de premier étage (210) et le piston de soupape de deuxième étage (206) étant déplacés par un fluide d'alimentation pénétrant dans l'ensemble de soupape (114) pour commander sélectivement le flux de fluide dans la première chambre (112) et la deuxième chambre (110) du moteur (10) de manière que le piston de moteur (104) effectue un mouvement alternatif, en entraînant ainsi le mouvement alternatif de l'arbre (106) pour déplacer le piston de pompe (130).

2. Pompe doseuse alimentée en fluide selon la revendication 1, dans laquelle l'ensemble de soupape (114) est configuré de manière que, lorsque le fluide circule dans la première chambre (112), le piston de moteur (104) se déplace vers la deuxième chambre (110), en forçant ainsi l'arbre (106) à se déplacer dans une première direction.

3. Pompe doseuse alimentée en fluide selon la revendication 2, dans laquelle, quand l'arbre (106) se déplace dans la première direction, le piston de soupape de premier étage (210) est déplacé dans la première direction.

4. Pompe doseuse alimentée en fluide selon la revendication 3, dans laquelle, quand le piston de soupape de premier étage (210) atteint une fin de course dans la première direction, le piston de soupape de deuxième étage (206) se déplace dans la première direction.

5. Pompe doseuse alimentée en fluide selon la revendication 3, dans laquelle, quand le piston de soupape de deuxième étage (206) atteint une fin de course dans la première direction, le flux de fluide est dirigé dans la deuxième chambre (110) de manière que le piston de moteur (104) se déplace vers la première chambre (112) et l'arbre (106) se déplace dans une deuxième direction.

6. Pompe doseuse alimentée en fluide selon la revendication 1, dans laquelle le piston de pompe (130) divise le logement de pompe (120) en une première chambre de pompe (132) et une deuxième chambre de pompe (134).

7. Pompe doseuse alimentée en fluide selon la revendication 6, dans laquelle la première chambre de pompe (132) et la deuxième chambre de pompe (134) comprennent chacune un orifice d'entrée, configuré pour aspirer du fluide dans la chambre de pompe respective (132, 134) lorsque le piston de pompe (130) se déplace pour dilater la chambre de pompe respective (132, 134), et un orifice de sortie configuré pour expulser du fluide hors de la chambre de pompe respective (132, 134) lorsque le piston de pompe (130) se déplace pour comprimer la chambre de pompe respective (132, 134).

8. Pompe doseuse alimentée en fluide selon la revendication 1, dans laquelle un premier fluide circule dans le moteur (10) et un deuxième fluide est pompé par la pompe à fluide (20), le flux du premier fluide dans le moteur (10) et du deuxième fluide pompé par la pompe à fluide (20) résultant en une proportion qui est sensiblement maintenue entre le volume du premier fluide circulant dans le moteur (10) et le volume du deuxième fluide pompé par la pompe à fluide (20).

9. Pompe doseuse alimentée en fluide selon la revendication 1, dans laquelle au moins un entre le piston de soupape de premier étage (210) et le piston de soupape de deuxième étage (206) comprend une ou plusieurs rainures (340, 344, 346) configurées chacune pour recevoir un joint d'étanchéité, et dans laquelle chaque rainure (340, 344, 346) définit des encoches (354) configurées pour réduire la probabilité de pincement du joint d'étanchéité.
